# FASCICULE DE BREVET EUROPEEN

(11) **EP 0 917 062 B1**
(45) Date de publication et mention de la délivrance du brevet: **20.08.2003**
(21) Numéro de dépôt: 98402747.4
(22) Date de dépôt: 05.11.1998
(51) Int. Cl.: G06F 13/16, G06F 15/163

(54) **Dispositif d'échange entre unités de traitement d'informations à processeurs interconnectés par un bus commun**
Vorrichtung zur Kommunikation zwischen Informationsverarbeitungseinheiten und mit einem gemeinsamen Bus verbundenenen Prozessoren
Apparatus for communication between information processing units and processors interconnected by a common bus

(30) Priorité: 06.11.1997 FR 9713949
(43) Date de publication de la demande: 19.05.1999
(73) Titulaire: ALCATEL, 75008 Paris (FR)
(72) Inventeur: Guezou, Adrien, 22300 Lannion (FR); Ollivier, Marcel, 22300 Ploulec'h (FR); Paris, Bernard, 22300 Lannion (FR)
(74) Mandataire: Sciaux, Edmond

(56) Documents cités:
- EP-A- 0 320 607
- EP-A- 0 646 876
- US-A- 5 386 539
- PATENT ABSTRACTS OF JAPAN vol. 18, no. 232 (P-1731), 27 avril 1994 & JP 06 019785 A (MATSUSHITA ELECTRIC IND. CO. LTD.), 28 janvier 1994

## Description

L'invention concerne un dispositif d'échange de données entre des unités de traitement d'informations, dites unités d'agent, dont les processeurs sont interconnectés par un bus commun dans un ensemble, tel que par exemple un ensemble de traitement d'appel d'un commutateur de télécommunications, ou tout autre ensemble comportant une pluralité d'unités susceptibles d'avoir à supporter un fort trafic d'échange de données entre elles.

Comme il est connu, l'existence de moyens de prise en compte et de traitement de données toujours plus performants conduit à la mise en place d'applications qui conduisent à la transmission et au traitement de volumes de données toujours plus importants et à des vitesses toujours plus grandes. Les processeurs, en particulier, exploitent des fréquences d'horloge toujours plus importantes, par exemple de l'ordre de 200 MHz à ce jour, par contre de telles fréquences d'horloge ne sont pas admises par les liaisons de transmission qui sont susceptibles d'être reliées aux ports d'entrée-sortie de ces processeurs, pour des raisons liées à des contraintes physiques. Il est donc généralement prévu d'utiliser des fréquences d'horloge nettement plus faibles pour les échanges de données entre les processeurs des unités de traitement d'un même ensemble, lorsque ces processeurs sont interconnectés. Il est donc nécessaire de prévoir des mesures particulières pour éviter le plus possible que les possibilités de traitement des processeurs ne soient pratiquement limitées par l'insuffisance des moyens de transmission par l'intermédiaire desquels ces processeurs communiquent entre eux.

Il existe en particulier une normalisation d'origine IEEE qui est intitulée "IEEE standard for Futurebus+" pour bus d'interconnexion entre unités de traitement qui émane de l'IEEE. Toutefois, en raison de l'universalité visée par cette normalisation, il est difficile d'obtenir des réalisations matériellement simples et aisément intégrables dans des sous-ensembles qui parfois ont déjà par ailleurs une importante complexité. Cette difficulté de réalisation concerne tant le bus lui-même, que les connecteurs nécessaires au raccordement des unités à desservir et les composants d'interface de bus. Elle est notamment liée au nombre élevé de liaisons parallèles comportées par le bus, au niveau de performance requis des divers composants et aux diverses contraintes liées au fonctionnement du sous-ensemble organisé autour de ce bus et des unités qu'il dessert.

Le document EP 0 646 876 décrit un dispositif d'échange entre des unités de traitement d'informations, dites unités d'agent, dont les processeurs sont interconnectés par un bus commun dans un ensemble comportant une pluralité d'unités prévues pour supporter un fort trafic d'échange de données entre elles. Les unités de traitement d'informations comportent des moyens de traitement, tels que des processeurs, qui sont interconnectés par un bus d'échange, externe, commun à ces unités, dont le partage est orchestré par un arbitre. Chaque unité comporte des moyens de stockage, au moins temporaire, où les données sont conservées de manière organisée à des adresses déterminées permettant de les inscrire et/ou de les lire à la demande. Ces moyens de stockage de données constituent un ensemble mémoire d'échange réparti dans les dites unités, commun à toutes ces unités et accessible par toutes au travers du bus d'échange, chaque unité comportant une partie des moyens de stockage de cet ensemble sous la forme d'une mémoire d'échange accessible d'une part par les moyens de traitement de l'unité et d'autre part par les moyens de traitement des autres unités au travers du bus d'échange.

Mais ce document n'aborde pas les problèmes de transmision et de synchronisation, qui se posent pendant le transfert des données d'une unité vers un autre. Le but de l'invention est de résoudre ces problèmes.

L'objet de l'invention est un dispositif d'échange de données entre des unités de traitement d'informations, dites unités d'agent, comportant des moyens de traitement, tels que des processeurs, qui sont interconnectés par un bus d'échange multifilaire, externe, commun à ces unités, dont le partage est orchestré par un arbitre ; chaque unité comportant :
- des moyens de stockage, au moins temporaire, où les données sont conservées de manière organisée à des adresses déterminées permettant de les inscrire et/ou de les lire à la demande, l'ensemble formé par ces unités comportant des moyens de stockage de données constituant un ensemble mémoire d'échange réparti dans les dites unités, commun à toutes ces unités et accessible par toutes au travers du bus d'échange ; chaque unité comportant une partie des moyens de stockage de cet ensemble sous la forme d'une mémoire d'échange accessible d'une part par les moyens de traitement de l'unité et d'autre part par les moyens de traitement des autres unités au travers du bus d'échange ;
- des moyens d'interface de bus processeur local et mémoire d'échange et de bus d'échange dans chaque unité qui sont interconnectés, pour assurer les échanges d'information entre respectivement les moyens de stockage constitués par la mémoire d'échange de l'unité, les moyens de traitement de cette unité et les moyens de traitement des autres unités par l'intermédiaire du bus d'échange quxquelles ces autres unités sont reliées ;
**caractérisé** en ce que les moyens d'interface comportent des moyens de stockage intermédiaire dans chaque unité, entre mémoire d'échange et bus d'échange, constitués par des mémoires tampons à accès rapide auxquelles le processeur de l'unité accède au rythme de l'horloge qui le régit et auxquelles les autres unités accèdent au rythme de l'horloge régissant alors ledit bus d'échange ;
et en ce que chaque unité comporte des moyens pour générer un premier signal d'horloge destiné à être transmis par le bus d'échange aux autres unités, et des moyens pour récupérer un second signal d'horloge ) sur le bus d'échange, pour produire un troisième signal d'horloge destiné à permettre une exploitation locale des données susceptibles d'être transmises, vers cette unité à partir d'une autre, au rythme du second signal d'horloge.

Le dispositif d'échange ainsi caractérisé permet à l'unité initiatrice d'une transaction sur le bus d'émettre avec sa propre horloge, son signal d'horloge étant utilisé par l'unité réceptrice pour stocker provisoirement les données de la transaction dans des moyens de stockage intermédiaires. Ces données sont ensuite exploitées au rythme d'une horloge locale, notamment pour stocker ces données dans la mémoire de partage. Il n'y a pas de synchronisme imposé entre les horloges des différentes unités. Ce dispositif permet des fréquences de transfert élevées, de l'ordre de 50 à 83 MHz, sur un bus de fond de panier ayant une longueur de l'ordre de 50 cm.

L'invention, ses caractéristiques et ses avantages sont précisés dans la description qui suit en liaison avec les figures évoquées ci-dessous.
La figure 1 présente un schéma de principe d'un ensemble d'unités de traitement d'informations interconnectées par un bus commun.
La figure 2 présente un schéma relatif à l'organisation d'une mémoire d'échange d'une unité de traitement.
La figure 3 présente un schéma synoptique relatif aux diverses liaisons prévues entre deux unités de traitement quelconques.
La figure 4 présente un graphique, composé de chronogrammes simplifiés référencés de 4A à 4F, qui est relatif à la transmission de groupes d'informations par une unité.

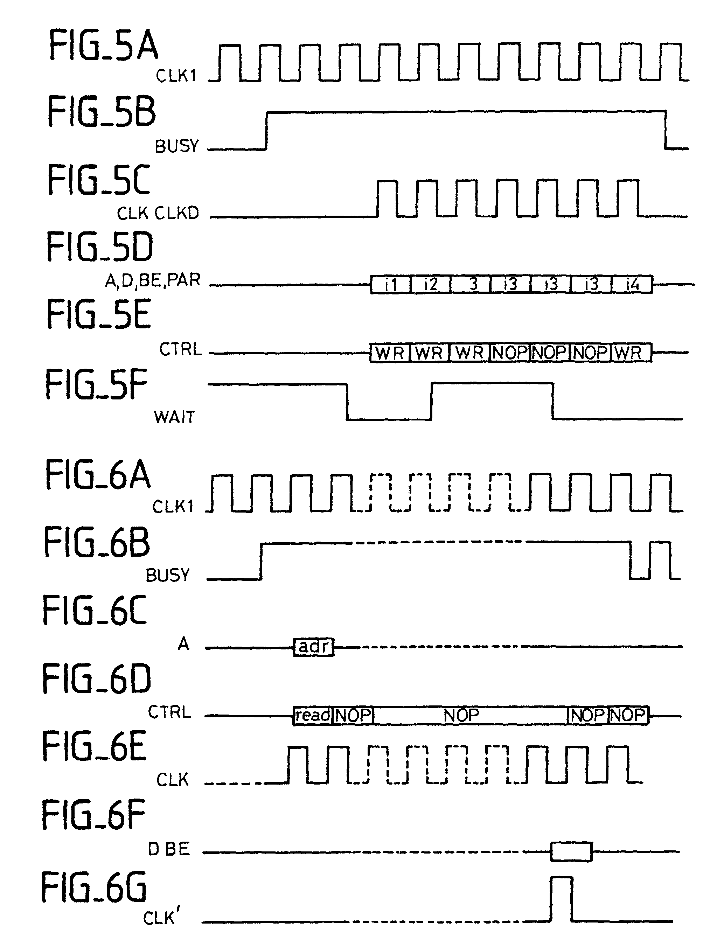

La figure 5 présente un graphique, composé de chronogrammes simplifiés référencés de 5A à 5F, qui est relatif à une opération de reprise de transmission par une unité.
La figure 6 présente un graphique, composé de chronogrammes simplifiés référencés de 6A à 6G, qui est relatif à une opération de lecture par une unité.

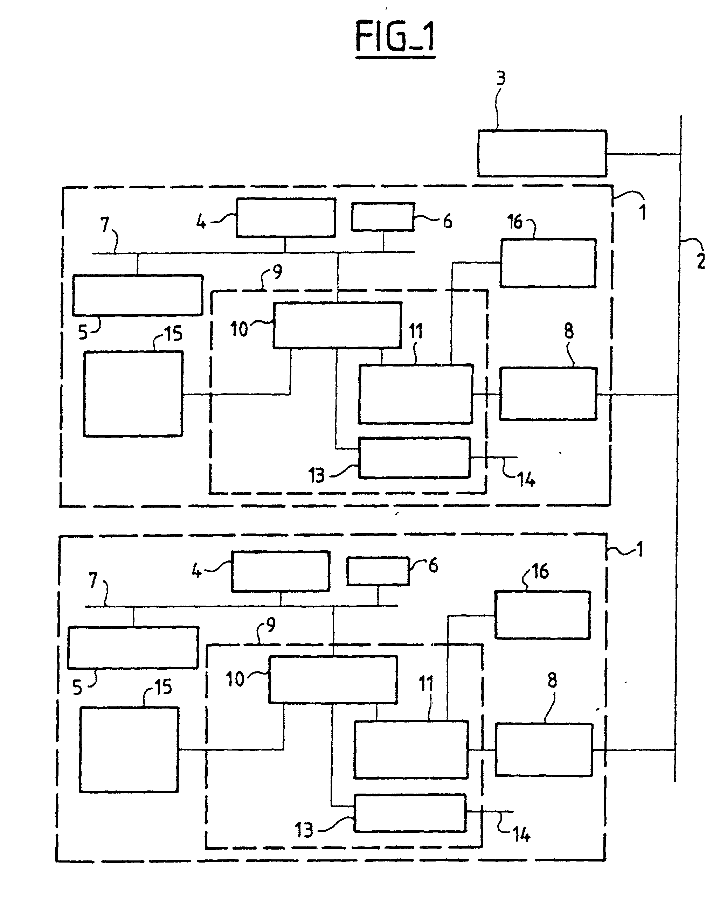

L'ensemble présenté en figure 1 comporte des unités de traitement d'informations 1 d'agents qui sont interconnectées par un bus multifilaire 2, dit d'échange inter-agents, dont le partage est orchestré par un arbitre 3 dans un ensemble, qui est ici montré isolé mais qui le plus souvent fait lui-même partie d'un ensemble plus grand et par exemple d'un centre de télécommunications, comme déjà envisagé plus haut.

Dans un tel cas, les unités de traitement comportent d'autres liaisons et par exemple un autre bus d'interconnexion avec d'autres unités d'équipement, ceci étant sans rapport direct avec l'objet de l'invention et n'étant, en conséquence, pas représenté ici.

Chaque unité de traitement est classiquement organisée autour d'au moins un processeur 4 supposé à hautes performances, comme envisagé plus haut, ce processeur comporte au moins une mémoire 5, ici dite privée, permettant un stockage temporaire et/ou permanent de données, telles que par exemple des données organisées de programme ou des données traitées ou à traiter, usuellement organisées, comme il est connu.

Dans l'exemple de réalisation présenté sur la figure 1, il a aussi été indiqué une mémoire cache 6 permettant d'accélérer diverses opérations de traitement, comme il est connu. Ces mémoires 5 et 6 communiquent avec le processeur 4 par l'intermédiaire d'un bus 7, dit bus processeur, comme usuel en ce domaine.

Ce bus 7 sert aussi aux échanges de données du processeur 4 d'une unité de traitement 1 avec celui ou ceux de la ou des autres unités 1 connectées au même bus d'échange 2, chaque unité 1 disposant d'un module émetteur-récepteur 8 lui permettant d'émettre et de recevoir par l'intermédiaire dudit bus d'échange. Un circuit d'interface 9 est inséré entre le module émetteur-récepteur 8 et le bus processeur 7, il comporte notamment une interface 10, dite interface de bus processeur et de mémoire d'échange, une interface 11, dite de bus d'échange inter-agents et une interface 13, dite de bus local. Dans la réalisation envisagée l'interface de bus local 13 permet des échanges d'information au travers du bus de desserte local 14 par le processeur 4 de l'unité comportant ce bus et par les processeurs des autres unités par l'intermédiaire du bus d'échange 2 pour ces dernières. Ce bus 14 dessert par exemple un ou des équipements non représentés qui sont reliés à l'unité 1 et qui échangent des données avec celle-ci, par exemple un ou des équipements téléphoniques non représenté(s), un accès à un réseau, tel qu'un réseau en anneau à jeton ou autre.

Les interfaces 10, 11 et 13 ont la charge d'assurer les opérations d'échange entre les sous-ensembles entre lesquelles elles sont insérées en liaison avec les structures de commande, usuellement de type processeurs ou automates qui régissent ces sous-ensembles et auxquels ces interfaces sont sélectivement reliées selon les besoins, comme connu en ce domaine. Le bus processeur 7 est conçu pour supporter des débits relativement élevés et il reçoit donc à cet effet des signaux d'horloge ayant une fréquence élevée, par exemple de 66 MHz, il est pratiquement d'une longueur la plus courte possible.

Le bus d'échange 2 est destiné à permettre un dialogue entre des unités de traitement d'informations 1, permettant par exemple une exploitation de type processeur ou coupleur, qui se partagent à cet effet un ensemble mémoire, dit d'échange, dont les éléments constitutifs sont répartis au niveau des unités 1. Il est plus particulièrement destiné à permettre un débit de données compatible avec des processeurs rapides et par exemple des transmissions au rythme d'une horloge de l'ordre de 50 MHz.

Comme classique en matière de transmission par bus les données sont organisées de manière déterminée et comportent chacune une pluralité de bits correspondant à tout ou partie d'une information et des bits complémentaires par exemple d'adressage, chaque donnée destinée à être transmise comportant par exemple trente-deux bits d'information, trente-deux bits d'adresse et des bits complémentaires de parité, de validation, de caractérisation de transaction ou autre.

Vu les débits de transfert d'informations envisagés et pour des raisons connues de l'homme de métier, le nombre d'unités 1 reliées à un bus d'échange 2 est nécessairement limité, ce nombre étant par exemple compris entre deux et dix dans l'exemple de réalisation proposé par la suite, il en est nécessairement de même en ce qui concerne la longueur de ce bus, qui est par exemple réalisé sur une carte multicouche et qui s'étend par exemple sur une longueur de l'ordre d'une trentaine de centimètres.

Chaque unité 1 d'agent est par exemple portée par une carte connectée à une carte multicouche de fond de panier où le bus d'échange 2 est implanté, comme connu en ce domaine. Le module émetteur-récepteur 8 est par exemple réalisé à l'aide de composants BTL (backplane transceiver logic) entre lesquels sont répartis les signaux transmis ou à transmettre entre les unités 1 et entre ces dernières et l'arbitre 3. La répartition des signaux entre les différents composants d'un module émetteur-récepteur est effectuée selon des critères fonctionnels. Dans une forme préférée de réalisation, il est ainsi prévu que les signaux relatifs à la reconnaissance d'une unité destinataire et du type de transaction prévu pour une communication entre des unités soient traités par un même composant BTL pour permettre un traitement plus rapide des demandes. Un mécanisme connu en lui-même est prévu pour assurer une resynchronisation des signaux parvenant à un module émetteur-récepteur 8 au niveau des composants BTL qui le constitue de manière que la restitution soit réalisée de façon synchrone quels que soient les composants du module alors impliqués.

Comme indiqué plus haut, les échanges de données entre deux unités 1 s'effectuent par l'intermédiaire d'un ensemble mémoire, dit d'échange, dont les éléments constitutifs sont répartis au niveau des unités, chacune de ces dernières comportant donc une mémoire, dite d'échange, ici référencée 15.

L'ensemble formé par un bus d'échange 2, par son arbitre 3 et par les unités 1 qui lui sont connectées est organisé pour permettre l'adressage avec partage de l'ensemble mémoire que constituent les mémoires d'échange 15 des unités, l'arbitrage du bus d'échange et les échanges de données entre unités. Ces échanges se traduisent par des opérations d'écriture en ensemble mémoire, par des opérations de lecture en ensemble mémoire et éventuellement par des opérations annexes, par exemple des opérations dites de prise de verrou ou de génération d'interruptions inter-agents.

Comme il a déjà été indiqué les opérations de lecture sont pénalisantes dans la mesure où les vitesses de transfert de données par l'intermédiaire du bus d'échange sont lentes par rapport aux vitesses de transfert permises par les processeurs. Par contre, les opérations d'écriture sont moins pénalisantes dans la mesure où il est possible de prévoir que les données à transmettre par le bus d'échange soient fournies par les processeurs à des mémoires tampons à accès rapide servant d'intermédiaire de transmission entre ces processeurs et le bus d'échange.

Selon l'invention, il est donc prévu de privilégier les actions des processeurs conduisant à des écritures pour limiter au maximum les actions conduisant à des lectures. Il est ainsi prévu qu'une unité ayant en sa possession des informations nécessaires ou utiles à d'autres unités communique ces informations dès que possible pour éviter au maximum les lectures correspondant à des demandes des dites autres unités en vue d'obtenir ces informations.

A cet effet, la mémoire d'échange 15 de chaque unité est partagée par tous les agents ayant accès au bus d'échange 2 et elle est donc vue par les processeurs 4 de toutes les unités 1 qui sont reliées à ce bus, chaque agent disposant d'une zone de mémoire affectée par logiciel à l'unité qui lui correspond dans la mémoire d'échange 15 de chacune des autres unités.

Dans la réalisation ici envisagée, l'adresse d'accès à une zone de mémoire réservée à un des agents est définie par la position physique de cet agent ou plus précisément de l'unité 1 qui lui correspond par rapport aux autres unités 1 que dessert le bus d'échange 2 dans l'ensemble constitué par ces unités.

Un espace mémoire de 1 Giga-octet est par exemple réservé à l'adressage global des mémoires d'échange dans un champ d'adressage de 4 Giga-octet, il est par exemple défini par deux bits A0, A1 définis dans un adressage effectué sur 32 bits.

Chaque agent se voit réserver une zone pour une mémoire d'échange dont la taille est par exemple comprise entre 8 et 64 Méga-octet et il y a place pour seize blocs logiques d'adressage d'au plus 64 Méga-octet dans l'espace mémoire défini ci-dessus.

Chacun des agents, ici prévus en un nombre au plus égal à dix, dispose d'un bloc logique d'adressage qui lui est attribué en fonction de sa position physique par rapport aux autres agents, comme déjà indiqué ci-dessus. La mémoire d'échange physique dont dispose chaque agent est placée en tête du bloc logique dont cet agent dispose.

Les autres blocs logiques d'adressage constituent des blocs de mémoire d'échange virtuelle et servent notamment à l'adressage pour i accès local, aux adressages pour diffusion par groupe et général. Ils peuvent éventuellement être exploités pour des agents supplémentaires,

Chaque agent dispose de l'adressage pour accès local qui est un adressage uniquement réalisable par le processeur de l'unité 1 de cet agent.

Une diffusion peut être générale et effectuée depuis une unité 1 d'un agent vers toutes les autres elle peut aussi être de groupe et effectuée depuis une unité vers un groupe d'unités prédéterminées. Une même unité peut éventuellement appartenir à plus d'un groupe.

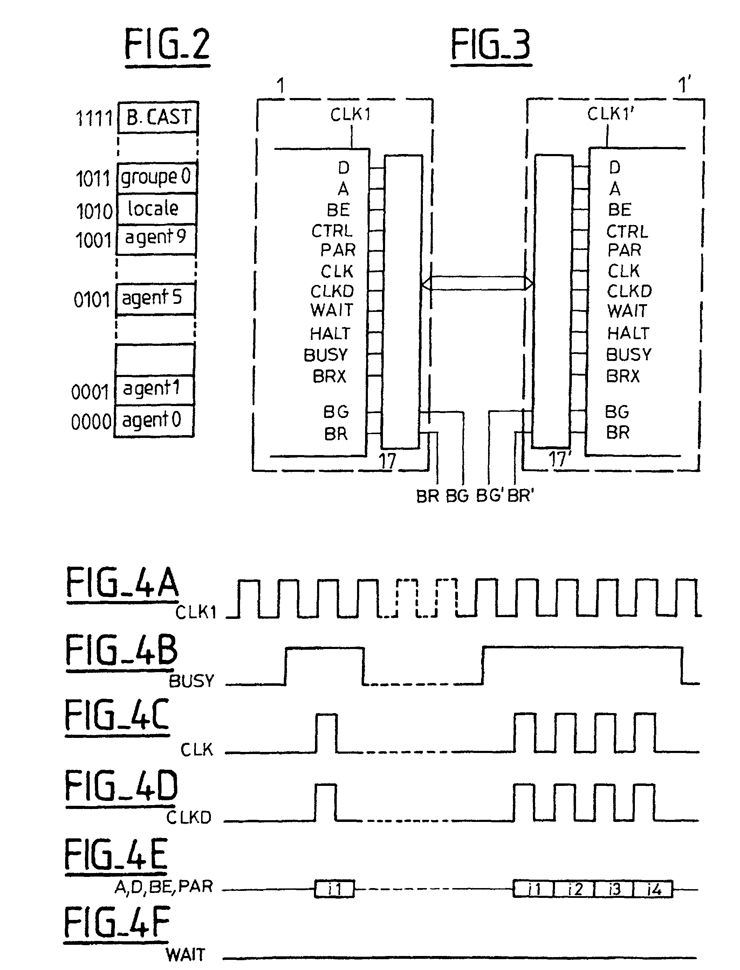

Les bits d'adressage d'un bloc, qui dans l'exemple choisi sont les bits A2, A3, A4 et A5, sont ici considérés comme susceptibles de correspondre soit à une adresse d'un bloc affecté à une unité 1, telles les adresses 000, 0001, 0101, 1001, en figure 2, soit une adresse d'un bloc affecté à la mémoire d'échange 15 localement au niveau d'une unité, telle l'adresse 1010, soit à une adresse de bloc prévue pour une diffusion générale, telle 1111, ou de groupe, telle 1011. L'adresse de bloc local, telle 1010, est ici prévue pour permettre aux logiciels d'échange mis en oeuvre par chaque processeur 4 d'unité d'exploiter la même adresse de communication avec la mémoire d'échange 15 de l'unité quelle que soit la position de cette unité par rapport aux autres le long du bus d'échange 2.

Un agent a, par exemple, la possibilité d'accéder à la mémoire d'échange 15 de l'unité 1 qui lui correspond, sans passer par le bus d'échange 2 auquel cette unité est reliée, en pointant sur l'adresse de bloc correspondant à cette unité, soit en pointant sur l'adresse de bloc local, soit encore en pointant sur une adresse de diffusion relative à un groupe, éventuellement de diffusion générale, dont fait partie l'unité.

Il est prévu que les unités puissent accéder pour écriture aux adresses d'agent et aux adresses de diffusion générale ou de groupe de l'ensemble mémoire d'échange par l'intermédiaire du bus d'échange. Par contre, les lectures ne s'effectuent que localement, notamment aux adresses de diffusion générale ou de groupe en mémoire d'échange d'une unité, si cette unité fait partie du groupe visé dans ce dernier cas, et cela sans passer par le bus d'échange.

Comme indiqué plus haut l'accès au bus d'échange 2 s'effectue sous le contrôle d'un arbitre 3, cet arbitrage est ici supposé réalisé d'une manière connue à l'aide de composants du commerce prévus à cet effet et il n'est donc pas détaillé ici, car il n'a qu'un rapport indirect avec l'objet de la présente invention.

Dans un exemple de réalisation, le processus d'arbitrage est prévu asynchrone et conduit à ce que l'arbitre 3 reçoive des demandes de réservation temporaire du bus d'échange 2 qui sont générées par les unités suivant leurs besoins respectifs. Chaque unité 1, dite appelante, désireuse de réserver le bus pour ses besoins génère son propre signal de requête asynchrone BR qu'elle transmet à l'arbitre 3 par une liaison filaire individuelle en vue d'en recevoir un signal d'accord BG transmis lui aussi de manière individuelle. Un tel signal d'accord BG est envoyé par l'arbitre 3 à la première des unités appelantes selon l'ordre d'arrivée des signaux de requête respectifs de ces unités. L'unité recevant le signal d'accord BG devient alors maître temporaire du bus d'échange 2, soit immédiatement si ce bus est libre comme l'indique un état caractéristique du signal d'occupation BUSY, soit après libération du bus d'échange par l'unité qui en avait la maîtrise et qui l'exploitait jusqu'alors, cette libération étant signalée par le changement d'état du signal d'occupation BUSY déclenché par l'unité maître au profit de l'unité qui va le devenir. L'unité 1 devenue maître supprime alors sa requête de manière à permettre au processus d'arbitrage entre les unités restant appelantes de se poursuivre.

Les transmissions de données par l'intermédiaire du bus d'échange 2 sont effectuées sous le contrôle de l'unité 1 qui est temporairement maître et qui comporte un circuit d'horloge 16, dit d'échange, à cet effet. Les circuits d'horloge 16 des unités comportent chacun une horloge d'émission d'une fréquence donnée préférablement identique pour toutes les unités et un module de récupération d'horloge permettant de récupérer la fréquence d'horloge régissant des données reçues d'une autre unité. Dans l'exemple de réalisation ici envisagé, les signaux d'horloge fournis par une unité 1 temporairement maître du bus d'échange 2 sont pris en compte par les unités 1 avec lesquelles elle communique, qui se synchronisent sur ces signaux. Ceci permet notamment à chaque unité 1 de prendre en compte les dispersions occasionnées par les différences de longueur de transmission dues à leurs positions respectives le long du bus d'échange.

Les liaisons nécessaires à une transmission de données entre des unités par l'intermédiaire du bus d'échange 2 sont symbolisées sur la figure 3 pour deux d'entre elles référencées 1 et 1'.

Les diverses liaisons constituant le bus d'échange 2 ont leurs extrémités reliées à des circuits d'extrémité spécialisés 17, 17' composés par exemple à l'aide de composants FUTUREBUS FB1651 qui comportent des registres tampons bidirectionnels échantillonnables et qui permettent de traiter en parallèle un nombre déterminé de signaux. Ces circuits d'extrémité 17 sont ici supposés exploités dans chaque unité 1, telles les unités 1 et 1' de la figure 3, pour des transferts de signaux qui correspondent ici à:
- n signaux de donnée D;
- m signaux d'adresse A correspondants, n étant égal à trente-deux et m à trente dans un exemple de réalisation;
- p signaux de validation de donnée en écriture BE, avec par exemple p égal à quatre, les bits de donnée étant groupés par octets;
- q signaux CTRL caractérisant le type de transaction demandé, q étant par exemple égal à quatre et permettant d'identifier des écritures ou des lectures de données groupées de manière sécable ou insécable, par exemple par mots de trente-deux bits, par groupe de mots, et par caractéristique de position ou de fonction;
- r signaux PAR de parités relatifs à au moins certains des autres signaux transmis et notamment aux signaux de validation BE;
- le signal d'horloge CLK généré par l'horloge d'émission de l'unité 1 maître pour cadencer l'émission des signaux d'adresse, des q signaux CTRL et des signaux de parité relatifs aux signaux précédents, ce signal cadence aussi les n signaux de données, les p signaux de validation de données et les signaux de parité correspondants lors d'une écriture, il est émis sur le bus avec ces divers signaux;
- un signal d'horloge CLKD de synchronisation du bus en réception, ce signal correspond au niveau du récepteur au signal CLK émis par le maître du bus;
- un signal d'attente WAIT et un signal d'arrêt HALT respectivement émis par une unité destinataire soit lorsque ses capacités de réception courent temporairement le risque d'être insuffisantes, soit lorsque cette unité est hors d'état de traiter des informations.

Chacune des unités 1 ou 1' génère des signaux d'horloge d'émission ici référencés CLK ou CLK' suivant l'unité et communique avec l'arbitre par l'intermédiaire de signaux de requête BR ou BR' cet arbitre fournissant en réponse des signaux individuels d'accord BG ou BG' comme décrit plus haut. Un signal BRX de présence de requête est également transmis aux unités et notamment à l'unité alors maître du bus d'échange pour lui signaler la présence ou non d'une requête émanant d'une autre unité.

Une écriture dans l'ensemble mémoire d'échange s'effectue au rythme de l'horloge d'émission que génère l'unité d'agent, supposée l'unité 1 sur le chronogramme 4A, à laquelle la maîtrise du bus d'échange 2 vient d'être accordée par l'arbitre 3, cette horloge étant référencée CLK1 sur le chronogramme 4A. Comme décrit plus haut, c'est un changement d'état du signal BUSY traduisant la disponibilité du bus d'échange 2 qui permet le commencement d'une opération d'écriture. Le signal de synchronisation CLK émis par une unité pour une opération d'écriture est constitué par le signal d'horloge CLK1 fourni par l'unité 1 devenue maître du bus d'échange dès que le permet l'état, et un changement d'état du signal BUSY, un tel changement étant présenté sur le chronogramme 4B. Un délai correspondant à un cycle de signal d'horloge est par exemple prévu pour l'apparition du signal CLK après un changement d'état du signal BUSY.

La réception du signal d'horloge et de synchronisation CLKD par une unité destinataire, telle par exemple 1', est utilisée par cette dernière pour l'écriture de données dans des mémoires tampons situées dans l'interface 10 de bus processeur et de mémoire d'échange, et dans l'interface 11 de bus d'échange inter-agents. Cette horloge CLKD est par exemple obtenue par l'intermédiaire d'un classique circuit de récupération d'horloge. La présence de mémoires tampons de type FIFO, au niveau de la partie réceptrice de l'unité destinataire permet de prendre en compte pour cette récupération les signaux reçus de l'unité 1 émettrice qui sont alors stockés dans ces mémoires tampons en attente de la disponibilité de l'accès à la mémoire d'échange.

Les bits d'adresse A, de donnée d'information D, de validation de donnée émise BE et de parité PAR sont alors reçus en parallèle par l'unité destinataire 1' par l'intermédiaire des liaisons parallèles qui leur sont réservées au niveau du bus d'échange 2 par groupe correspondant au type de transaction prévu, tel le groupe d'information i1, comme symbolisé sur le chronogramme 4E. Plusieurs groupes d'informations, tels i1, i2, i3, i4 sont susceptibles d'être successivement transmis sans interruption s'ils sont en attente dans l'unité émettrice 1 et si aucun signal WAIT ou HALT n'est reçu par cette dernière. Comme déjà évoqué plus haut, un signal WAIT est transmis vers une unité alors émettrice par une unité alors réceptrice lorsque les capacités de stockage en réception de données de cette unité réceptrice sont en passe d'être temporairement saturées si l'envoi de données nouvelles par l'unité alors émettrice se poursuit. Une pause à l'émission est alors réalisée pour permettre le désengorgement de l'unité destinataire qui a produit le signal WAIT.

Les chronogrammes 5A à 5F montrent des exemples d'opérations dont le déroulement est influencé par les changements d'état du signal WAIT, ici de type asynchrone.

Dès que le signal WAIT revient à un état de repos après relâchement par une unité destinataire désengorgée, l'unité alors maître du bus d'échange 2 qui maintient le signal d'occupation BUSY reprend les opérations d'écriture interrompues comme le montre les chronogrammes 5A à 5F. Cette reprise est ici supposée réalisée un cycle d'horloge après le changement d'état du signal WAIT.

Si une nouvelle interruption d'émission est demandée par l'unité destinataire par l'intermédiaire d'un nouveau changement d'état du signal WAIT, ce dernier est à nouveau transmis à l'unité maître du bus d'échange 2 qui stoppe à nouveau l'émission de données nouvelles en cours au niveau d'un dernier groupe, tel le groupe i3 qui suit immédiatement les groupes i1 et i2 dans l'exemple présenté. Dans la réalisation ici envisagée, le groupe d'informations i3 continue à être produit mais il n'est plus pris en compte par l'unité destinataire dans la mesure où le signal CTRL qu'elle reçoit également de l'unité maître n'est plus un code de fonction requérant une écriture mais correspond maintenant à un code de fonction NOP indiquant à toute unité destinataire que le groupe d'informations simultanément émis n'est pas à prendre en compte.

Lorsque le signal WAIT revient à l'état de repos après relâchement par l'unité destinataire précédemment engorgée, comme déjà indiqué, l'unité maître du bus d'échange reprend les opérations d'écriture interrompues par une nouvelle émission du dernier groupe émis, soit ici le groupe i3 avec un code de fonction NOP, préalablement à tout autre groupe tel ici i4. Des chiens de gardes sont aussi prévus comme il est connu en la matière pour éviter tout blocage du bus d'échange 2 par une des unités reliées à lui en cas de défaillance matérielle ou logicielle.

Le signal BRX permet par ailleurs à une unité temporairement maître de conserver la maîtrise du bus d'échange, si aucune requête visant à obtenir cette maîtrise n'est alors en attente. Ceci permet en particulier à une unité de conserver la maîtrise du bus d'échange 2 pour un monologue éventuellement long, sans intervention inutile de l'arbitre 3, par exemple au cours d'une phase de téléchargement à partir de l'unité maître ou encore si le débit d'information est sporadique et très faible.

Le débit maximum d'une unité en écriture implique une absence de chevauchement entre cycles d'arbitrage et cycles de transmission des données au travers du bus d'échange 2. Le temps total à prendre en compte pour déterminer le temps minimal et le temps maximal possibles correspond à la somme d'un temps de prise du bus d'échange, du temps de resynchronisation d'unité destinataire sur l'horloge du nouveau maître, d'un cycle d'horloge maître pour la préparation du groupe de bits correspondant à la première donnée et d'un cycle d'horloge maître pour l'émission de cette première donnée. Chaque nouvelle donnée émise en succession ajoute un cycle d'horloge maître. Suivant la position des unités au long du bus d'échange, il y a nécessairement une dispersion des temps minima et maxima. Il est à noter qu'en raison des possibilités d'envoi d'informations par rafales, ou bursts, plus la charge devient grande plus la transmission s'effectue de manière performante puisque le débit s'adapte progressivement à la charge en matière de données en augmentant avec cette charge.

Le débit maximum du bus d'échange en écriture se détermine de manière correspondante et le temps total à prendre en compte pour déterminer le temps minimal et le temps maximal possibles est égal à la somme d'un temps de relâchement du signal BUSY, du temps de resynchronisation, d'un cycle d'horloge maître pour la préparation du groupe de bits correspondant à la première donnée et d'un cycle d'horloge par donnée successivement émise.

Une lecture dans l'ensemble mémoire d'échange s'effectue aussi au rythme de l'horloge d'émission CLK1 que génère l'unité d'agent ayant alors la maîtrise du bus d'échange 2, cette unité étant à nouveau supposée être l'unité 1 sur le chronogramme 6A. Cette unité maître émet un signal CTRL correspondant à un ordre de lecture "read" comme montré sur le chronogramme 6C, et un signal A définissant une adresse de lecture "adr", comme montré sur le chronogramme 6D, dès que l'état ou un changement d'état du signal BUSY le permet, ainsi que le montre le chronogramme 6B. L'ordre de lecture "read" est ici immédiatement suivi par une succession de code fonctionnel NOP tant que le résultat de l'opération de lecture demandée n'a pas été obtenu.

Le signal d'horloge et de synchronisation CLKD reçu de l'unité maître par une unité destinataire est exploité par cette dernière pour récupérer l'ordre de lecture et l'adresse où cette lecture doit être effectuée dans la mémoire d'échange 15 de cette unité destinataire, si c'est dans cette mémoire d'échange que la lecture doit être faite. Un signal de donnée D correspondant à l'information se trouvant à l'adresse indiquée en mémoire d'échange 15 et un signal de validation BE correspondant sont alors émis par l'unité destinataire de l'ordre de lecture avec un signal de synchronisation CLK' issu de l'horloge CLK de l'unité 1', comme l'illustrent les chronogrammes 6E à 6G . Dans l'exemple de réalisation envisagé, une information obtenue par lecture à une adresse donnée est présente pendant un cycle d'horloge sur les fils du bus d'échange par l'intermédiaire desquels elle est transmise. Le nombre de signaux de synchronisation fournis par une unité destinataire est fonction du type de transaction requis par l'unité maître, soit par exemple un code CTRL de quatre bits de valeur 0010, si la lecture d'un mot de trente-deux bits a été requise, ou un code CTRL de valeur 0011si c'est la lecture de deux mots de trente-deux bits qui est prévue, etc.

Dans une forme préférée de réalisation, il est prévu qu'une demande de lecture n'est réalisable par une unité temporairement maître qu'à partir du moment où elle a préalablement réalisé toutes les opérations d'écriture qu'elle a en attente d'émission. De même, une unité destinataire ne peut réaliser une lecture en mémoire d'échange qu'à partir du moment où elle a préalablement réalisé toutes les opérations d'écriture en mémoire d'échange qu'elle a en attente en provenance du bus d'échanges 2.

Le débit maximum d'une unité en lecture implique la prise en compte d'un temps total obtenu en sommant un temps de prise du bus d'échange, du temps de resynchronisation, un cycle d'horloge maître pour la préparation du groupe de bits correspondant à la demande de lecture, un cycle d'horloge maître pour l'émission de ce groupe de bits, le temps de transmission de ce groupe de bits et du signal qui l'accompagne, le temps nécessaire à la récupération d'une demande de lecture par l'unité à laquelle cette demande a été envoyée, du temps de resynchronisation, du temps d'arbitrage d'un bus d'accès, non représenté, à la mémoire d'échange, du temps nécessaire à la lecture de la donnée adressée dans la mémoire d'échange qui la contient, du temps nécessaire à l'automate de traitement de la lecture, du temps de resynchronisation sur l'horloge d'émission CLK du destinataire, du temps de transmission de la donnée et du signal d'horloge qui l'accompagne et éventuellement du temps de resynchronisation par l'unité maître des bits groupés qui constituent la donnée.

## Revendications

1. Dispositif d'échange de données entre des unités de traitement d'informations (1), dites unités d'agent, comportant des moyens de traitement, tels que des processeurs (4), qui sont interconnectés par un bus d'échange (2) multifilaire, externe, commun à ces unités, dont le partage est orchestré par un arbitre (3); chaque unité comportant :
- des moyens de stockage(5, 6, 15), au moins temporaire, où les données sont conservées de manière organisée à des adresses déterminées permettant de les inscrire et/ou de les lire à la demande, l'ensemble formé par ces unités comportant des moyens de stockage de données constituant un ensemble mémoire d'échange réparti dans les dites unités (1), commun à toutes ces unités et accessible par toutes au travers du bus d'échange (2) ; ; chaque unité (1) comportant une partie des moyens de stockage de cet ensemble sous la forme d'une mémoire d'échange (15) accessible d'une part par les moyens de traitement (4) de l'unité et d'autre part par les moyens de traitement des autres unités au travers du bus d'échange ;
- des moyens d'interface (10,11) de bus processeur local et mémoire d'échange et de bus d'échange dans chaque unité qui sont interconnectés, pour assurer les échanges d'information entre respectivement les moyens de stockage (15) constitués par la mémoire d'échange de l'unité, les moyens de traitement (4) de cette unité et les moyens de traitement des autres unités par l'intermédiaire du bus d'échange (2) auxquelles ces autres unités sont reliées ;
**caractérisé en ce que** les moyens d'interface (10,11) comportent des moyens de stockage intermédiaire dans chaque unité, entre mémoire d'échange (15) et bus d'échange (2), constitués par des mémoires tampons à accès rapide auxquelles le processeur (4) de l'unité accède au rythme de l'horloge qui le régit et auxquelles les autres unités accèdent au rythme de l'horloge régissant alors ledit bus d'échange ;
et **en ce que** chaque unité comporte des moyens (16) pour générer un premier signal d'horloge (CLK) destiné à être transmis par le bus d'échange aux autres unités, et des moyens (16) pour récupérer un second signal d'horloge (CLKD) sur le bus d'échange, pour produire un troisième signal d'horloge destiné à permettre une exploitation locale des données susceptibles d'être transmises, vers cette unité à partir d'une autre, au rythme du second signal d'horloge.

2. Dispositif, selon la revendication 1, **caractérisé en ce que** les mémoires d'échange (15) qui forment l'ensemble mémoire d'échange sont logiciellement organisées par blocs individuellement affectés à des entités constituées notamment des unités et de groupes d'unités avec éventuellement un groupe comportant toutes les unités.

3. Dispositif, selon l'une des revendications 1, 2, **caractérisé en ce que** l'adresse d'une mémoire d'échange (15) d'une unité dans l'ensemble mémoire d'échange est définie par la position de l'unité (1) par rapport aux autres au long du bus d'échange (2).

4. Dispositif, selon l'une des revendications 1 à 3, **caractérisé en ce que** les échanges de données s'y effectuent à l'initiative d'une unité (1) alors demanderesse de transfert de données à laquelle la maîtrise du bus d'échange (2) a alors été accordée par l'arbitre (3), et qui impose le premier signal d'horloge qu'elle produit dès que le permet l'état ou un changement d'état d'un signal d'occupation de bus d'échange (BUSY) temporairement contrôlé par une unité lorsque cette unité est effectivement devenue maître du bus, ledit premier signal d'horloge étant exploité par l'unité maître qui le produit pour transmettre au moins une donnée composée d'une pluralité de bits par l'intermédiaire du bus d'échange (2) à des fins de lecture ou d'écriture dans au moins une des mémoires d'échange (15) de l'ensemble mémoire d'échange.

5. Dispositif, selon la revendication 4, **caractérisé en ce qu'**au moins la première donnée transmise, par l'intermédiaire du bus d'échange, par une unité temporairement devenue maître de ce bus d'échange comporte des bits correspondant à un signal (CTRL) caractéristique du type de transaction alors imposé pour les transferts de données.

6. Dispositif, selon l'une des revendications 4, 5, **caractérisé en ce qu'**un signal d'attente (WAIT) ou d'arrêt (HALT) est susceptible d'être transmis vers l'unité maître par une unité destinataire de données en phase de transmission de données par ladite unité maître, respectivement soit lorsque les capacités de réception de données de ladite unité destinataire deviennent temporairement insuffisantes, soit lorsque cette unité destinataire est hors d'état de prendre en compte ces données.

## Patentansprüche

1. Vorrichtung zum Datenaustausch zwischen Informationsverarbeitungseinheiten (1), als Agenteneinheiten bezeichnet, die Verarbeitungsmittel wie etwa Prozessoren (4) aufweisen, die untereinander durch einen mehradrigen, externen, diesen Einheiten gemeinsamen Austauschbus (2) verbunden sind, dessen gemeinschaftliche Nutzung durch einen Arbiter (3) verwaltet wird; wobei jede Einheit umfasst:
- Mittel (5, 6, 15) zum wenigstens zeitweiligen Speichern, wo die Daten organisiert and festgelegten Adressen abgelegt sind, die es erlauben, sie nach Bedarf einzutragen und/oder zu lesen, wobei die durch diese Einheiten gebildete Anordnung Mittel zum Speichern von Daten umfasst, die eine auf die Einheiten (1) verteilte Austauschspeicheranordnung bilden, die allen Einheiten gemeinsam ist und für alle über den Austauschbus (2) zugänglich ist; wobei jede Einheit (1) einen Teil der Speichermittel dieser Anordnung in Form eines Austauschspeichers (15) umfasst, der einerseits für die Verarbeitungsmittel (4) der Einheit und andererseits für die Verarbeitungsmittel der anderen Einheiten über den Austauschbus zugänglich ist;
- Lokalprozessorbus- und -Austauschspeicher-Schnittstellenmittel (10) und Austauschbus-Schnittstellenmittel (11) in jeder Einheit, die untereinander verbunden sind, um die Informationsaustäusche zwischen den durch den Austauschspeicher der Einheit gebildeten Speichermitteln (15), den Verarbeitungsmitteln (4) dieser Einheit und den Verarbeitungsmitteln der anderen Einheiten über den Austauschbus (2), an den diese anderen Einheiten angeschlossen sind, sicherzustellen;
**dadurch gekennzeichnet, dass** die Schnittstellenmittel (10, 11) in jeder Einheit Zwischenspeichermittel zwischen einem Austauschspeicher (15) und dem Austauschbus (2) umfassen, die durch Pufferspeicher mit schnellem Zugriff gebildet sind, auf die der Prozessor (4) der Einheit im Rhythmus des ihn steuernden Taktsignals zugreift, und auf die die anderen Einheiten im Rhythmus des dann den Austauschbus steuernden Taktsignals zugreifen;
und dass jede Einheit Mittel (16) zum Erzeugen eines ersten Taktsignals (CLK), das dazu bestimmt ist, über den Austauschbus an die anderen Einheiten übertragen zu werden, und Mittel (16) zum Auffangen eines zweiten Taktsignals (CLKD) auf dem Austauschbus zum Erzeugen eines dritten Taktsignals, das dazu dient, eine lokale Nutzung der im Rhythmus des zweiten Taktsignals von einer anderen Einheit an diese Einheit übertragbaren Daten zu ermöglichen, umfasst.

2. Vorrichtung nach Anspruch 1, **dadurch gekennzeichnet, dass** die Austauschspeicher (15), die die Austauschspeicheranordnung bilden, softwaremäßig in Blöcken organisiert sind, die einzeln Entitäten zugeordnet sind, die insbesondere durch die Einheiten und Gruppen von Einheiten gebildet sind, wobei gegebenenfalls eine Gruppe alle Einheiten umfasst.

3. Vorrichtung nach einem der Ansprüche 1 bis 2, **dadurch gekennzeichnet, dass** die Adresse eines Austauschspeichers (15) einer Einheit in der Austauschspeicheranordnung definiert ist durch die Position der Einheit (1) in Bezug auf die anderen entlang des Austauschbusses (2).

4. Vorrichtung nach einem der Ansprüche 1 bis 3, **dadurch gekennzeichnet, dass** die Datenaustäusche dort auf Initiative einer Einheit (1) stattfinden, die dann Datenübertragung verlangt, und der die Herrschaft über den Austauschbus (2) dann von dem Arbiter (3) zugewiesen worden ist, und die das erste Taktsignal, das sie erzeugt, vorgibt, sobald der Zustand oder eine Änderung des Zustandes eines Belegungssignals des Austauschbusses (BUSY), das zeitweilig von einer Einheit gesteuert wird, wenn diese Einheit tatsächlich Herrscher über den Bus geworden ist, dies zulässt, wobei das erste Taktsignal von der busbeherrschenden Einheit, die es erzeugt, genutzt wird, um wenigstens ein aus einer Mehrzahl von Bits bestehendes Datum über den Austauschbus (2) zu Lese- oder Schreibzwecken in wenigstens einen der Austauschspeicher (15) der Austauschspeicheranordnung zu übertragen.

5. Vorrichtung nach Anspruch 4, **dadurch gekennzeichnet, dass** wenigstens das erste über den Austauschbus von einer zeitweilig zum Herrscher über diesen Austauschbus gewordenen Einheit übertragene Datum Bits umfasst, die einem Signal (CTRL) entsprechen, das charakteristisch für den Typ von dann für die Datenübertragungen vorgegebener Transaktion ist.

6. Vorrichtung nach einem der Ansprüche 4, 5, **dadurch gekennzeichnet, dass** ein Wartesignal (WAIT) oder Haltesignal (HALT) an die busbeherrschende Einheit von einer Datenempfängereinheit in einer Phase der Übertragung von Daten durch die busbeherrschende Einheit übertragbar ist, wenn die Datenempfangskapazitäten der Empfängereinheit zeitweilig unzureichend werden oder wenn diese Empfängereinheit außer Stande ist, diese Daten zu berücksichtigen.

## Claims

1. A system for interchanging data between data processor units (1) referred to as "agent" units, the system comprising processor means such as processors (4) which are interconnected by an external multiwire interchange bus (2) common to said units, with bus sharing being orchestrated by an arbitrator (3), each unit comprising:
· means (5, 6, 15) for storing, at least temporarily, data which is conserved in organized manner at determined addresses enabling the data to be written and/or read on demand, the assembly formed by said units including data storage means constituting an interchange memory assembly shared amongst said units (1), common to all of said units, and accessible by all of them via the interchange bus (2); each unit (1) including a fraction of the storage means of said assembly in the form of an interchange memory (15) which is accessible both by the processor means (4) of the unit and by the processor means of the other unit via the interchange bus;
· interface means (10, 11) in each unit for the local processor bus and the interchange memory and for the interchange bus, which interface means are interconnected to interchange data between the storage means (15) constituted by the interchange memory of the unit, the processor means (4) of said unit, and the processor means of other units via the interchange bus (2) to which said other units are connected;
the interchange system being **characterized in that** the interface means (10, 11) comprise intermediate storage means in each unit, between the interchange memory (15) and the interchange bus (2), said means being constituted by fast access buffer memories to which the processor (4) of the unit can have access at its own clock rate and to which the other units can have access at the rate of the clock then governing said interchange bus; and
**in that** each unit includes means (16) for generating a first clock signal (CLK) for transmission over the interchange bus to the other units, and means (16) for recovering a second clock signal (CLKD) from the interchange bus, in order to produce a third clock signal for use in local operations on data suitable for transmission to said unit from another unit, at the rate of the second clock signal.

2. A system according to claim 1, **characterized in that** the interchange memories (15) which form the interchange memory assembly are logically organized in blocks that are individually allocated to units constituted in particular by units and groups of units, possibly together with a group including all of the units.

3. A system according to claim 1 or 2, **characterized in that** the address of an interchange memory (15) of a unit in the interchange memory assembly is defined by the position of the unit (1) relative to the other units along the interchange bus (2).

4. A system according to any one of claims 1 to 3, **characterized in that** data interchanges take place therein at the initiative of a unit (1) then requesting data transfer and that has, at that time, had mastery of the interchange bus (2) allocated thereto by the arbitrator (3), and which imposes the first clock signal as produced thereby as soon as that is made possible by the state of an interchange bus busy signal (BUSY) or a change of state therein, which signal is temporarily under the control of a unit while said unit is indeed master of the bus, said first clock signal being used by the master unit which produces it to transmit at least one data item made up of a plurality of bits via the interchange bus (2) for read or write purposes in at least one of the interchange memories (15) of the interchange memory assembly.

5. A system according to claim 4, **characterized in that** at least the first data item transmitted over the interchange bus by a unit that has temporarily become master of said interchange bus includes bits corresponding to a control signal (CTRL) characteristic of the type of transaction then being imposed for data transfer purposes.

6. A system according to claim 4 or 5, **characterized in that** a wait signal (WAIT) or a stop signal (HALT) can be transmitted to the master unit by a data destination unit while data is being transmitted by said master unit, respectively either when the data reception capacity of said destination unit has temporarily become insufficient, or else when said destination unit is incapable of taking the data into account.
